(19) **Europäisches Patentamt**

**European Patent Office**

**Office européen des brevets**

(11) **EP 1 691 332 A1**

(12) **EUROPEAN PATENT APPLICATION**

(43) Date of publication:
  **16.08.2006 Bulletin 2006/33**

(51) Int Cl.:
  **G06Q 40/00** (2006.01)

(21) Application number: **06250751.2**

(22) Date of filing: **11.02.2006**

(84) Designated Contracting States:
  **AT BE BG CH CY CZ DE DK EE ES FI FR GB GR HU IE IS IT LI LT LU LV MC NL PL PT RO SE SI SK TR**
  Designated Extension States:
  **AL BA HR MK YU**

(30) Priority: **11.02.2005 US 652386 P**
  **28.09.2005 US 237022**

(71) Applicant: **Credit Suisse First Boston LLC**
  **New York NY 10010-3629 (US)**

(72) Inventors:
  • **McConaughy, Jon**
   **New Jersey 08540 (US)**

  • **Star, Josh**
   **New York, 10710 (US)**
  • **Ling, Zack**
   **New Jersey, 07458 (US)**
  • **Song, Liguo**
   **New Jersey, 07310 (US)**
  • **Hsu, Tony**
   **New York, 11355 (US)**

(74) Representative: **Lawrence, John**
  **Barker Brettell,**
  **138 Hagley Road,**
  **Edgbaston**
  **Birmingham B16 9PW (GB)**

(54) **Trading tool to enhance stock and commodity index execution**

(57) The invention provides systems (110'; 120) providing replicable financial instrument orders, and establishing a fill price that is better than the theoretical upper limit of the industries' best order execution. The system (110', 120) has the capability of transforming a client's index order into a replicable product, such as index futures (150) and/or baskets (140) of the underlying stocks. The system selects whichever method and combination of securities that will achieve the best expected execution for the particular market. The system achieves the best price and execution efficiency by utilising dynamic market information (275) across all possible liquidity formats, liquidity pools, and high performance trading systems, delivering a product that has multiple forms at the best possible price. The result is a better final execution price that outperforms current industry practices for best order execution. The system delivers the fill order in the original liquidity format at the price, or equivalent price, of the replicable product.

To be accompanied, when published, by Figure 1 of the accompanying drawings.

FIG. 1

Block Diagram

**Description**

**SPECIFICATION**

PRIORITY AND RELATED APPLICATION

This application claims priority to U.S. Provisional Application No. 60/652,386 filed on February 11, 2005 and U.S. Application No. 11/237,022 filed September 28, 2005, which is hereby incorporated by reference.

BACKGROUND OF THE INVENTION

Best order execution has long been a challenge for brokerage and investment firms, having both financial and regulatory significance. How and where an order is executed can affect the transactional cost of the order, as well as the price of the underlying security itself. The execution quality of a financial instrument order is thus influenced by the financial industry's goals and methods of achieving best order execution, as well as applicable federal regulations. As for regulatory requirements, the Securities & Exchange Commission requires brokers to report the quality of order executions, including how market orders are executed. Brokers have the responsibility of providing the most advantageous order execution for its customers to satisfy both the regulatory requirements and customer satisfaction. The quality of the executed order is ultimately determined by the final execution price, while taking into account the reduction in opportunity cost, the market condition of the financial instrument, and the timing of the particular order.

To achieve a particular type of index exposure, investor's purchase financial instruments that track an index, such as Exchange Traded Funds (ETFs), equity baskets and swaps. In general, these and other equity markets are reasonably efficient due in part to arbitragers who engage in the simultaneous purchasing and selling of a security, usually on different exchanges, to profit from the price differential. Even with arbitrageurs, continuous mispricings between like products that are susceptible to arbitrage remain throughout a trading day. These ineffieiencies between like products, however, may be too small for arbitrageurs to exploit, but may result in potentially significant savings on large and frequent trades. These mispricings may also occur too quickly for individual traders to accurately act upon, and may occur across multiple product classes where the trader may not have the ability or authority to trade.

There is a need to provide better execution quality for index orders. Specifically, there is a need to provide an execution quality that can outperform current industry practices of best order execution. There is also a need to execute an index order using the most efficient means available at any given point in time, and systematically evaluate all liquidity sources available at the time of the order. The present invention solves this problem by using all highly related liquidity formats, comprehensive information, and related risk to achieve better execution quality that, as a result, outperforms current industry practice of best order execution. The present invention not only finds the best solution for achieving a particular index exposure, but does so using dynamic market conditions. This allows clients to spend more time focusing on strategic investment decisions instead of micro-managing an order execution. The present invention thus executes trades beyond the upper limit of current industry best order execution practices.

SUMMARY OF THE INVENTION

The present invention, known as Liquidity Transformer (LT), is directed to systems and methods of order execution for providing replicable financial instrument orders, known as a replicable product. The present invention also discloses systems and methods for executing orders for index products and index related trading strategies. The present invention achieves an advantageous price and execution efficiency by utilizing dynamic market information across a wide range of possible liquidity formats, liquidity pools, and high performance trading systems, and delivering a product that has multiple forms at the best possible price.

As an example, in an exemplary embodiment, the system may accept an order for an index security (*e.g.*, an exchange traded fund (ETF), swap, equity basket or other financial instrument used to achieve index exposure). The system has the capability of transforming that order into a replicable product, such as index futures and/or baskets of the underlying stocks. The system selects whichever method and combination of securities may be expected to achieve an execution for the particular market that may provide price advantages vis a vis a straight trade in the ordered security itself. The optimized product may take the form of the ordered security itself or of a substitute for this security, i.e., a replicable product. In the case of a replicable product, the financial security executed, or combination thereof, will have a high degree of similar market exposure as the ordered security, and with small, short term removable risk. The system delivers the fill order in the original liquidity format, but at the price, or equivalent price, of the replicable product.

It is another object of the present invention to complete a market evaluation on orders that the system receives through the use of dynamic market information. For example, the system compares the ordered security with equivalent futures prices and markets, ETF prices and markets, and the ordered security's underlying component prices and markets. The system then decides a preferred combination for each order, and executes these orders using the most efficient means available at the point in time of the order.

It is another object of the present invention to reduce the market impact of executed orders. The market depth (or availability of a particular quantity of shares at particular price levels) of each product affects market impact. When a single instrument is used for index exposure, the market may affix a premium to that instrument based on the supply and demand for that particular instrument. The present invention reduces this impact by nearly instantaneously executing a combination of financial instrument orders, *i.e.*, the replicable product, across all exchanges. The savings may increase as the order size increases. The system simultaneously executes across multiple exchanges and across multiple products, attempting to access optimized prices while reducing the information exposed to the marketplace while the order is executed. The system continually evaluates the depth and pricing available in multiple products, and when an order is executed, it simultaneously attempts to execute the order using all of its available resources. While executing in a single instrument could forfeit money to arbitrageurs, the system attempts to capture and deliver the benefit of advantageous price differentials to the executed order.

It is another object of the present invention to provide measurable savings substantially equivalent to the bid-ask spread on small orders. Providing a replicable product deepens the liquidity pool, which effectively tightens the bid-ask spread on large orders. These small continuous mispricings may add up to significant savings, which are often too small for arbitrageurs to reap any benefit.

It is another object of the present invention to reduce or eliminate the need to monitor and evaluate multiple markets and products for index exposure. The present invention makes it possible to achieve index exposure at any given time without giving up opportunities for improved liquidity, and without having to determine the most liquid product. The system attempts to find the most liquidity possible, and deliver it through the executed order. Instead of focusing on fair value, or micro-managing an execution, clients can spend more time focusing on strategic investment decisions.

The present invention can be used in conjunction with already existing investment strategies to better execute financial instrument orders. The strategies that may utilize the present invention include, but are not limited to: Volume Weighted Average Price (VWAP), Time Weighted Average Price (TWAP), etc.

BRIEF DESCRIPTION OF THE DRAWINGS

Fig. 1 illustrates a block diagram of the connections between the Liquidity Transformer System that produces the executable replicable financial instrument orders, and other components of the financial management structure.
Fig. 2 illustrates a block diagram of an alternative embodiment of the connections between the Liquidity Transformer System that produces the executable replicable financial instrument orders, and other components of the financial management structure.
Fig. 3 illustrates a process flow diagram of the computation of the executable replicable financial instrument orders.

DETAILED DESCRIPTION OF THE PREFERRED EMBODIMENTS

The present invention is directed towards systems and methods for providing replicable financial instrument orders, known as a replicable product, and establishing a fill price of an ordered financial instrument that is better than the theoretical upper limit of the industries' best order execution. Further, the present invention provides systems and methods for executing orders for index products and index related trading strategies. As a result, the present invention allows a trader to achieve the best price and execution efficiency by utilizing dynamic market information across multiple possible liquidity formats, liquidity pools, and high performance trading systems. The result is better execution quality, *i.e.*, a better final execution price, that outperforms current industry practices for best order execution. It is also understood that the systems and methods disclosed herein can be provided and/or performed at one location, or spread over a plurality of locations using a plurality of facilities and machines.

Replicable financial instruments are investment instruments whose market exposure can be replicated with a high degree of similarity using alternative financial instruments, or a combination thereof, and with small, short term removable risk. This market exposure can be replicated regardless of the direction of the transaction, *i.e.*, buying or selling, or short term market direction. Examples of replicable financial instruments include, but are not limited to:

(a) Exchange traded funds (ETF), corresponding index futures, and underlying stock baskets;
(b) American Depository Receipts and foreign stock;
(c) Futures on commodity index, commodity ETFs, and underlying futures basket;
(d) Fixed income futures and underlying fixed income products;
(e) Fixed income index futures, baskets of fixed income products or fixed income futures;

(f) Foreign exchange (FX) futures and spot, fixed income swaps across currencies;

(g) Futures on FX index, basket of FX spots, futures.

Replicable financial instruments also refers to instruments in which the profit and loss profile of the transaction direction can be replicated. An example of such orders include, but is not limited to, transactions on financial instruments that have corresponding derivatives. Thus, by investing in alternative but replicable financial instruments (i.e., a replicable product), the risk can be reduced or entirely offset if the movement on the expected market matches the near future market trend.

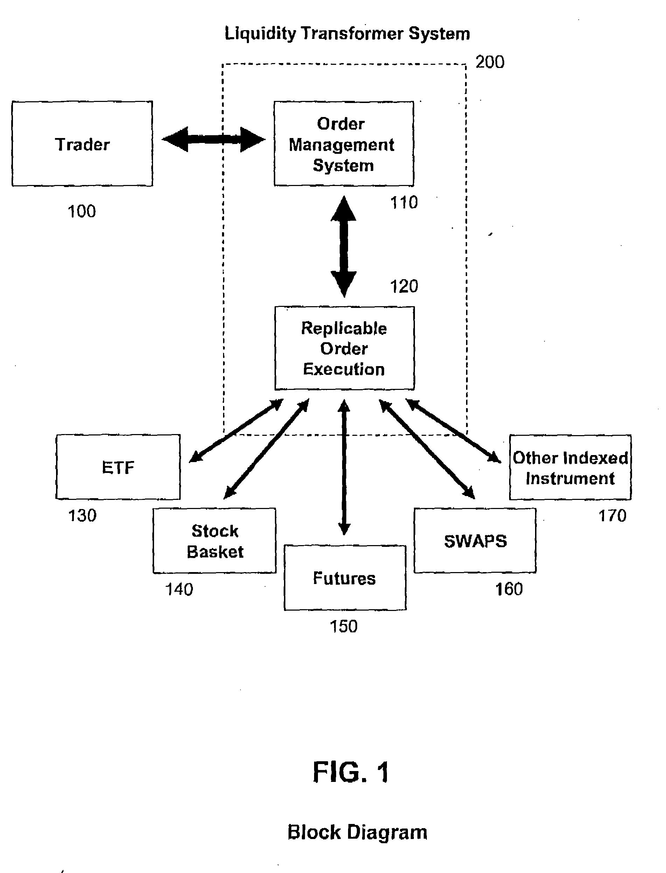

Referring to the drawings, Fig. 1 is a block diagram of a Liquidity Transformer System (LT) architecture used for executing replicable financial instrument orders. A trader **100** places an order for a financial instrument *(e.g.,* an index product) with an Order Management System (OMS) **110** with an instruction to fill the order using a replicable product. The financial instrument order is then routed to a Replicable Order Execution module (ROE) **120.** The OMS **110** also routes information regarding current and historical market conditions to the ROE **120**. The ROE **120** analyzes the order along with the current and historical market conditions. The ROE **120** then determines a best combination and a best format of financial instruments needed to fill the financial instrument order that replicates the index exposure of the ordered financial instrument. The ROE **120** creates orders for the best combination of financial instruments. The orders for the best combination of financial instruments is known as replicable financial instrument orders. The replicable financial instrument orders may include orders for ETFs **130,** stock baskets **140,** futures **150,** swaps **160,** or other indexed financial instruments **170.** After the replicable financial instrument orders are routed to a best available market for execution, the executed orders are routed back to the ROE **120.** The prices received on the executed replicable financial instrument orders are converted to a format corresponding to the ordered financial instrument. They are then averaged and sent back to the OMS **110.** The OMS **110** delivers a principal fill to the trader **100** in an original liquidity format of the ordered financial instrument, but at the price, or equivalent price, of the replicable financial instrument orders. This delivery is known as the replicable product (e.g., the average price of the ETFs **130,** stock baskets **140,** futures **150,** swaps **160,** or other indexed financial instruments **170** that were purchased as the replicable financial instruments).

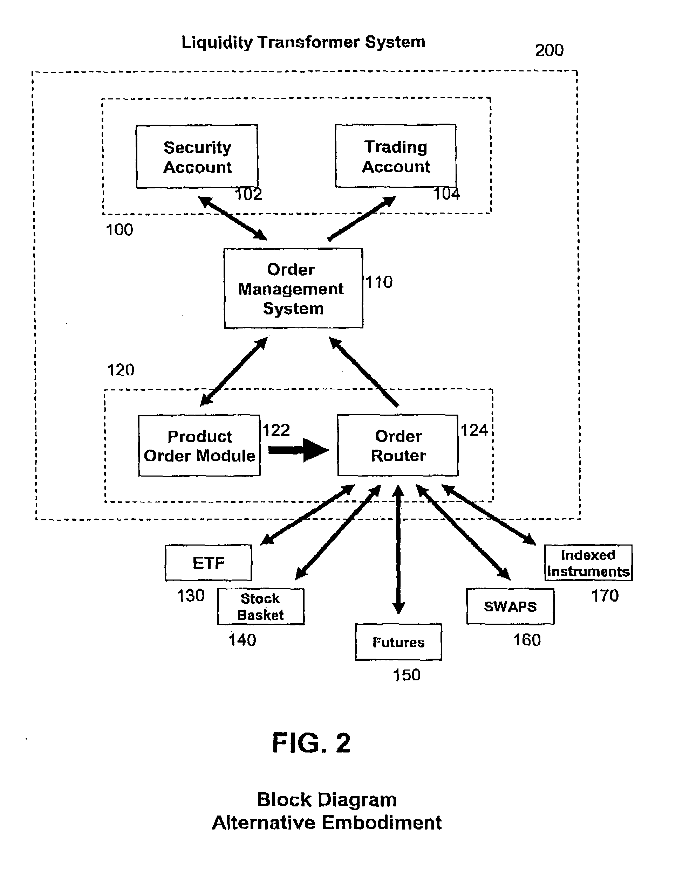

Fig. 2 is an alternative embodiment of a Liquidity Transformer System (LT) architecture used for executing replicable financial instrument orders. In Fig. 2, a Replicable Order Execution module (ROE) **120** consists of two modules, a Product Order module (PO) **122** and a Order Router (OR) **124.** A trader **100** consists of two modules, a Security Account (SA) **102** and a Trading Account (TA) **104.** In this embodiment of the invention, a financial instrument order originates from the SA **102,** and the order is placed with an Order Management System (OMS) **110.** The order is placed with an instruction to fill the order using a replicable product. The financial instrument order is then routed to the PO **122.** The OMS **110** also routes information regarding current and historical market conditions to the PO **122.** The PO **122** analyzes the order along with the current and historical market conditions. The PO **122** then determines a best combination and a best format of financial instruments needed to fill the financial instrument order that replicates the index exposure of the ordered financial instrument, and routes this information to the OR **124.** The orders for the best combination of financial instruments is known as the replicable financial instrument orders. The OR 124 creates orders for the best combination of financial instruments. The orders for the best combination of financial instruments is known as replicable financial instrument orders. The replicable financial instrument orders may include orders for ETFs **130,** stock baskets **140,** futures **150,** swaps **160,** or other indexed financial instruments **170.** After the replicable financial instrument orders are routed to a best available market for execution, the executed orders are routed back to the OR 124. The prices received on the executed replicable financial instrument orders are converted to a format corresponding to the ordered financial instrument. They are then averaged and sent to the OMS **110.** The OMS **110** delivers a principal fill order to the TA 104 and to the SA 102 in the original liquidity format of the ordered financial instrument, but at the price, or equivalent price, of the replicable financial instrument orders. This delivery is known as the replicable product (e.g., the average price of the ETFs **130,** stock baskets **140,** futures **150,** swaps **160,** or other indexed financial instruments 170 that were purchased as the replicable financial instruments).

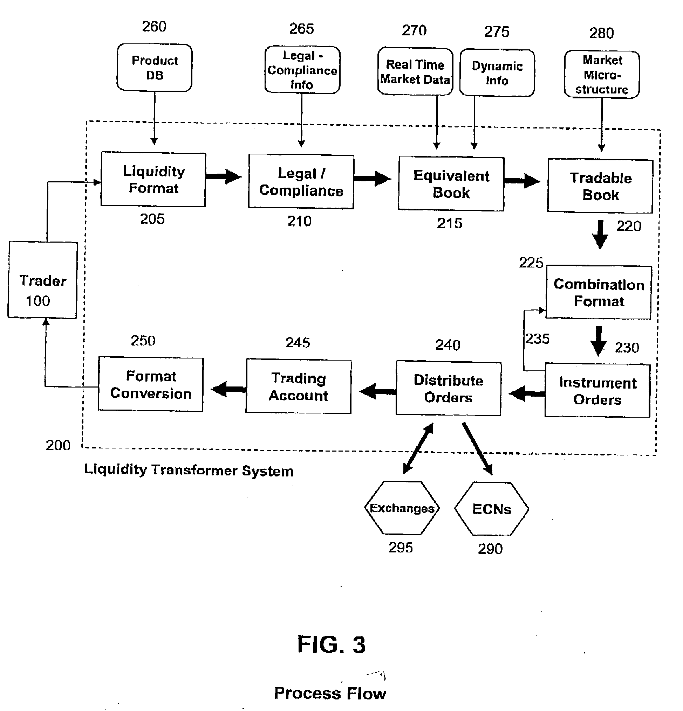

Fig. 3 is a flow chart illustrating the computational process of the executable replicable financial instrument ordering system. This figure illustrates the process and sources of data used to fill a financial instrument order with a replicable product, and returns the financial instrument ordered, but at a price equivalent to the replicable product. A trader **100** places an order for a financial instrument with a Liquidity Transformer System (LT) 200. The order may be an internal or external order, and my consist of a portfolio of orders. When the LT 200 receives the order, step 205 establishes a universe of financial instrument baskets by determining all possible formats of liquidity based on the ordered financial instrument, and the information contained in a product database **260.** The product database **260** contains comprehensive information regarding each component of a replicable financial instrument.

Step 210 analyzes the liquidity universe from step 205 using legal and compliance information **265** to determine which formats of liquidity could be used for each order, and how a transaction could be delivered and reported to the trader 100. Step **215** then determines an equivalent book, *i.e.*, an average depth value including price and size, in terms of the instruments under execution from clients for each replicable format. In determining the equivalent book of instruments, step **215** considers real time market data 270, consisting of market liquidity, real time price and size data for related instruments, as well as dynamic information **275.** Step **215** then reorganized the equivalent book of instruments from equivalent price terms to equivalent size terms.

The dynamic information **275** used in step **215** may include, but is not limited to: (i) interest rates, forecasted dividends, inventory adjustment factors used for equalizing prices across an ETF, index futures, stock baskets; (ii) foreign exchange (FX) rates used for American Depository Receipts and foreign stock; (iii) FX, and domestic and foreign interest rate term structures for replicating fixed income instruments through combining a FX product and foreign fixed income product; (iv) interest rates, and storage and delivery costs for commodity forward and futures; and (v) implied volatility for related instruments for equalizing the profit/cost profile for replicable orders.

Step **220** uses dynamic microstructure **280** and cross order feedback for each instrument to adjust the equivalent financial instrument baskets from step **215** to determine a tradable book for each format, *i.e.*, a mean depth price determination. Step **225** determines a best combination of financial instruments from the available formats to fill the order, such that the combination of financial instruments will have a high degree of similar market exposure as the financial instrument ordered, with small, short term removable risk. The best combination of financial instruments is known as replicable financial instrument orders. Step **230** places orders for the replicable financial instruments to achieve a best execution for each individual instrument. If the order is not completely filled, the order execution is fed back **235** to step **225,** so that the combination of formats can be changed, and the best combination of available formats to fill the order can be recalculated in step **225.** Step **230** places the orders for the recalculated combination.

In step **240**, replicable financial instrument orders are distributed across different trading venues, including exchanges **295** and electronic communication networks (ECNs) **290.** In step **245,** the filled replicable financial instrument orders are posted to a trading account. Step **250** converts the formats of the filled replicable financial instrument orders into the format of the financial instrument ordered, but at the price of the replicable financial instrument orders. The filled replicable financial instrument orders is known as the replicable product. The trader **100** receives the principal fill in the original liquidity format, and at the price of the replicable product.

The present invention looks at historical correlations using well known arbitrage analysis techniques to determine liquidity formats of similar risk profiles. The risk profiles need not be identical though, and often are not, as it is expected not to perfectly hedge risk between the ordered financial instrument and the particular liquidity format that is held. The main factors are price and correlation (or risk) in the determination of which particular liquidity format to choose. Typical portfolio optimization techniques can be used to determine the best combination of price and risk.

## EXAMPLE

It may be useful to set forth an exemplary description of the application of determining an equivalent book of instruments in step **215,** and determining a tradable book for each format in step **220.** The utility of the present invention resides in part in the ability to adapt it to a range of financial instruments, and that the business rule sets may be arbitrarily defined, and regularly altered or updated, as is most appropriate for a particular financial instrument or group of financial instruments.

Referring to Fig. 3, step **215** determines an equivalent book in terms of instruments under execution from clients for each replicable format. In determining the equivalent book, step **215** considers real time market data **270,** consisting of market liquidity, real time price and size data for related instruments, as well as dynamic information **275**. If the financial instrument ordered is an ETF order, for example, then the equivalent book of the ETF may consist of futures and stock baskets. In the case of the futures, the equivalent ETF price is calculated as follows:

$$\text{ETF Equivalent Price} = \frac{(\text{Futures Price} + \text{Futures Expected Dividend}) / \text{Conversion Factor}}{1 + (\text{interest rate} \times (\text{days to expiration} / 360))}$$

$$\text{Conversion Factor} = \frac{\text{Future Index Close of Previous Day} - \text{Future Component Dividends}}{\text{ETF Index Close of Previous Day} - \text{ETF Dividend}}$$

In the case of stock baskets, the equivalent ETF price is calculated as follows:

$$\text{ETF Equivalent Price} = \text{ETF Cash Component} + \frac{\text{Shares in one redemption unit} \times \text{Stock Price}}{\text{Size of Redemption Unit}}$$

Step 220 determines a tradable book for each format using dynamic microstructure 280 and cross order feedback for each instrument. And in this example of the ETF order, the equivalent book **215** of the ETF is adjusted by adjusting the size and price level of the current inventory in terms of related formats (e.g., short term view of the spread risk), and the current market micro-structure. Based on the adjusted books, the system determines the combination of applicable financial instrument baskets and sends orders to a trading system.

In another example, if the financial instrument ordered is and ADR order, then the equivalent book of the ADR may consist of foreign stocks. In this example, the equivalent ADR price is calculated by translating the real time foreign stock books into an ADR price in the following manner:

$$\text{ADR Equivalent Price} = \text{Foreign Exchange Rate} \times \text{Foreign Stock Price}$$

The equivalent book **215** of the ADR is then adjusted into a tradable book **220** by adjusting the size and price level of the current inventory in terms of related formats (*e.g.*, short term view of the foreign exchange risk), and the current market micro-structure. Based on the adjusted books, the system determines the combination of applicable financial instrument baskets and sends orders to a trading system.

In summary, one embodiment of the invention provides systems and methods for providing replicable financial instrument orders, and establishing a fill price that is better than the theoretical upper limit of the industries' best order execution. The system has the capability of transforming a client's index order into a replicable product, such as index futures and/or baskets of the underlying stocks. The system selects whichever method and combination of securities that will achieve the best expected execution for the particular market. The system achieves the best price and execution efficiency by utilising dynamic market information across all possible liquidity formats, liquidity pools, and high performance trading systems, delivering a product that has multiple forms at the best possible price. The result is a better final execution price that outperforms current industry practices for best order execution. The system delivers the fill order in the original liquidity format at the price, or equivalent price, of the replicable product.

It will be appreciated that there is an industry that sells computer systems for financial trading and that customers (those who buy the systems) have a general problem of how to have better, more efficient systems. They want machines with enhanced capabilities. A supplier or manufacturer of trading systems wants to have a system with enhanced performance. A better machine. Realising that a better machine is possible, and how to make it do things that existing systems do not, and deciding what it is the machine should do, are in part elements of the invention, at least in one aspect. Designing a new way of processing data to produce a replicable product from an evaluation of a number of financial instrument baskets, and then manufacturing a machine to implement that designed process is another aspect of the invention.

Looked at in one way, one embodiment of the invention can be considered to be a method of manufacturing a system for providing a financial instrument comprising designing the system to take certain data inputs and to process the data inputs in a new way to provide a new financial instrument offering to the user of the system, and manufacturing the system to operate in accordance with the design. Often, this will involve progressing a control processor to operate in accordance with the designed performance. Once manufactured, the system is available for use or sale.

Those of ordinary skill in the art will appreciate that the foregoing discussion of certain embodiments and preferred embodiments are illustrative only, and does not limit the spirit and scope of the present invention, which is limited only by the claims set forth below.

## Claims

1.   A computer based system for providing at least one replicable financial instrument at a price, comprising:

a software arrangement that is operable on a processor, the software arrangement comprising a computer program which configures the processor to evaluate a plurality of financial instrument baskets, wherein each financial instrument basket comprises one or more financial instruments and each of said financial instrument baskets correlates to a first financial instrument.

**2.** The system of claim 1, wherein said software arrangement is operable on a processor, said software arrangement comprising a computer program that configures the processor to choose at lest one of said financial instrument baskets of said plurality of financial instrument baskets and transferring the price of said financial instrument basket to another party.

**3.** The system of claim 1 or claim 2, wherein a computer readable database stores comprehensive performance information relating to said first financial instrument.

**4.** The system of any preceding claim, wherein said software arrangement is operable on a processor, said software arrangement comprising a computer program that configures the processor to determine a subset of financial instrument baskets available from said plurality of financial instrument baskets;
determine an average depth value for each instrument in said subset of financial instrument baskets, wherein said average depth value is expressed in terms of a depth price and depth size; and
configures the processor to determine a mean price from said depth price.

**5.** The system of claim 4, wherein a computer readable database stores legal and compliance information used to determine said subset of financial instrument baskets from said plurality of financial instrument baskets.

**6.** The system of claim 4 or claim 5, wherein a computer readable database stores real time market data, market liquidity, and real time price and size data for each related instrument used to determine average depth value for each instrument.

**7.** The system of any one of claims 4 to 6, wherein a computer readable database stores dynamic market microstructure for said equivalent book of instruments and used to determine a mean price for each instrument.

**8.** A method for providing at least one replicable financial instrument at a price, comprising:

evaluating a plurality of financial instrument baskets, wherein each said financial instrument basket comprises one or more financial instruments and each of said financial instrument baskets correlates to a first financial instrument.

**9.** The method of claim 8 further comprising choosing at least one of said financial instrument baskets of said plurality of financial instrument baskets and transferring the price of said financial instrument basket to a party.

**10.** The method of claim 8 or claim 9, wherein one or more financial instruments in said financial instrument basket are available across various trading venues and exchanges.

**11.** The method of any of claims 8 to 10, wherein establishing said plurality of financial instrument baskets depends on comprehensive performance information relating to said first financial instrument.

**12.** The method of any of claims 8 to 11, further comprising:

determining a subset of financial instrument baskets available from said plurality of financial instrument baskets:

determining an average market depth value for each instrument in said subset of financial instrument baskets, wherein said average market depth value is expressed in terms of a depth price and depth size; and determining a mean price from said depth price.

**13.** The method of claim 12, wherein determining said subset of financial instrument baskets depends on legal and compliance information

**14.** The method of claim 12 or claim 13, wherein determining said average market depth value depends on real time market data, market liquidity, and real time price and size data for each related instrument.

**15.** The method of any of claims 12 to 14, wherein determining said mean price depends on dynamic market microstructure for each of said instruments in said subset of financial instrument baskets.

Liquidity Transformer System

FIG. 1

Block Diagram

Liquidity Transformer System          200

Security
Account          102

Trading
Account          104

100

Order
Management
System          110

120

Product
Order Module          122

Order
Router          124

ETF          130

Stock
Basket          140

Futures          150

SWAPS          160

Indexed
Instruments          170

# FIG. 2

Block Diagram
Alternative Embodiment

260       265       270     275       280

| Product DB | Legal - Compliance Info | Real Time Market Data | Dynamic Info | Market Micro- structure |

Liquidity Transformer System

| Trader 100 |

| Liquidity Format 205 | Legal / Compliance 210 | Equivalent Book 215 | Tradable Book 220 |

225

| Combination Format |

235     230

| Format Conversion 250 | Trading Account 245 | Distribute Orders 240 | Instrument Orders |

200

Exchanges 295     ECNs 290

# FIG. 3

Process Flow

**European Patent Office**

**DECLARATION**

which under Rule 45 of the European Patent Convention
shall be considered, for the purposes of subsequent
proceedings, as the European search report

Application Number

EP 06 25 0751

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason: | INV.<br>G06Q40/00 |

A meaningful search is not possible on the basis of all claims because all claims are directed to - Scheme, rules and method for doing business - Article 52 (2)(c) EPC
The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.
The problems which are addressed do not appear to require a technical, but rather an administrative/organisational, or business, solution. The implementation of this solution may include the use of generic technical features, however these do not interact to solve any overall technical problem but merely serve their well-known functions.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 9 June 2006 | Aguilar, J.M. |

EPO FORM 1504 (P04C37)